# FASCICULE DE BREVET EUROPEEN

(11) **EP 3 249 273 B1**
(45) Date de publication et mention de la délivrance du brevet: **16.10.2019**
(21) Numéro de dépôt: 17171992.5
(22) Date de dépôt: 19.05.2017
(51) Int. Cl.: F16K 31/52, F24F 13/14, F16K 11/052, F16K 11/10, F24F 13/02, B60H 1/00

(54) **VANNE DE MÉLANGE D'AIR MULTIVOIES À RÉGULATION AÉRO-COMMANDÉE**
MEHRWEGE-LUFTMISCHVENTIL MIT LUFTGESTEUERTER REGULIERUNG
MULTI-CHANNEL AIR-MIXING VALVE WITH AIR-CONTROLLED ADJUSTMENT

(30) Priorité: 26.05.2016 FR 1654745
(43) Date de publication de la demande: 29.11.2017
(73) Titulaire: Liebherr-Aerospace Toulouse SAS, 31200 Toulouse (FR)
(72) Inventeur: BIDAULT, Jean-Yves, 31500 TOULOUSE (FR); TEULIÉ, Brice, 31620 FRONTON (FR)
(74) Mandataire: Cabinet BARRE LAFORGUE & associés

(56) Documents cités:
- FR-A1- 2 757 594
- US-A- 2 785 622
- US-A- 3 584 567
- US-A- 3 974 848
- US-A- 4 452 391

## Description

L'invention concerne une vanne de mélange d'air comprenant au moins un dispositif de régulation de flux d'air.

Les systèmes de conditionnement d'air permettant d'injecter un flux d'air dans un espace clos afin de réguler les conditions climatiques de cet espace clos comprennent généralement des vannes de mélange d'air permettant de de mélanger plusieurs flux d'air afin de réguler le flux d'air injecté dans l'espace clos tout en permettant une recirculation de l'air et le mélange de l'air en provenant de l'espace clos avec de l'air provenant de l'extérieur de l'espace clos à climatiser et/ou de l'air réchauffé provenant de l'espace clos à climatiser et/ou de l'air refroidi provenant également de l'espace clos à climatiser. Par exemple, certains systèmes de conditionnement d'air tels que les systèmes ECS (en anglais « Environmental control system ») permettent de fournir de l'air conditionné aux cabines de pilotage et pour passagers d'un aéronef.

Les vannes de mélange permettent de transmettre un flux d'air vers au moins une sortie de la vanne, le flux d'air transmis pouvant être un mélange de flux d'air provenant sélectivement d'une entrée ou de plusieurs entrées de la vanne de mélange. Afin de guider et de réguler les différents flux d'air provenant de différentes entrées de la vanne de mélange, les vannes de mélange comprennent généralement des volets permettant de réguler les flux d'air. Ces volets sont généralement positionnés au niveau d'entrées et de sorties des vannes de mélange. Ainsi, ces volets autorisent le passage du flux d'air lorsqu'ils sont en position ouverte et empêchent le passage du flux d'air lorsqu'ils sont en position fermée. On connaît en particulier des volets permettant d'empêcher le passage rétrograde d'un flux d'air par une entrée de la vanne vers l'extérieur de la vanne de mélange. Ces volets sont dits volets anti-retour. Les volets anti-retour connus sont généralement rappelés en position de fermeture par exemple par un mécanisme présentant un ressort. Cependant, ce type de mécanisme génère des pertes de charge significatives, pénalisantes dans de nombreuses applications, en particulier à bord des véhicules, notamment dans les systèmes de conditionnement d'air des aéronefs, dans lesquels l'air de recirculation est à basse-pression.

On connaît également des vannes comprenant au moins deux volets reliés par une bielle permettant aux volets de se déplacer de façon antagoniste de sorte que lorsqu'un volet est ouvert, l'autre volet est fermé. Par exemple, FR 2757594 décrit un dispositif de commande de volets d'entrée d'air, notamment pour une installation de climatisation. Le dispositif de commande comprend deux leviers assemblés en rotation à deux volets. Le dispositif de commande comprend également une bielle présentant des extrémités reliées aux leviers par des articulations d'axes parallèles et propres à entraîner conjointement les deux leviers de sorte qu'ils se déplacent de façon antagoniste (lorsqu'un des deux volets est ouvert, le deuxième est fermé). Afin de modifier la position des volets, la bielle est déplacée par un organe de commande tel qu'un câble. Un tel dispositif est relativement complexe, comporte de nombreuses pièces, est lourd et susceptible de défauts de fonctionnement, ce qui est particulièrement pénalisant pour un système embarqué à bord d'un véhicule et en particulier à bord d'un aéronef ou d'un engin spatial.

On connaît également des dispositifs dans lesquels une régulation pneumatique est assurée via des jets d'air à haute pression agissant sélectivement sur différents volets. Ces dispositifs sont également relativement complexes, délicats à mettre au point, et peu adaptés à leur intégration dans les systèmes de conditionnement d'air basse-pression. En outre, la régulation pneumatique génère une perte permanente d'énergie aérodynamique, à éviter dans les systèmes de conditionnement d'air basse-pression des véhicules, notamment des aéronefs.

US 3,974,848 divulgue une vanne comprenant un dispositif de régulation de flux qui est déplacé exclusivement sous l'effet de variations d'au moins une partie de flux traversant au moins une partie des ouvertures de ladite vanne.

US 4,452,391 divulgue un dispositif de régulation d'air comprenant un volet en profil d'aube qui est déplacé sous l'effet de variations d'au moins une partie de flux d'air traversant au moins une partie des ouvertures dudit dispositif.

L'invention vise donc à pallier ces inconvénients.

L'invention vise donc une vanne de mélange dans laquelle le mouvement des volets n'est pas opéré à l'aide d'organes de commande mécaniques.

L'invention vise aussi à diminuer le nombre d'éléments mécaniques permettant le fonctionnement d'une vanne de mélange de façon à limiter l'encombrement et le poids des éléments utiles au fonctionnement de la vanne.

L'invention vise également à proposer une telle vanne de mélange à moindre coût.

L'invention vise donc à proposer une vanne autonome en énergie et en fonctionnement, et à faible consommation énergétique.

L'invention vise également à proposer une telle vanne minimisant les pertes de charge et pouvant fonctionner avec au moins deux flux d'air, à basse-pression.

L'invention vise également à proposer une telle vanne qui puisse être commandée de façon simple, avec une faible dépense énergétique pour cette commande.

L'invention vise également à proposer une telle vanne qui présente une très grande durée de vie, une très grande fiabilité, ne soit pas sujette à des pannes de fonctionnement, et soit de maintenance simple et peu coûteuse.

L'invention vise en particulier à proposer une telle vanne qui soit compatible avec son intégration à bord d'un véhicule, en particulier à bord d'un aéronef ou d'un engin spatial, notamment dans un circuit de circulation d'air d'un système de conditionnement d'air à basse pression.

Pour ce faire, l'invention concerne une vanne de mélange d'air selon la revendication 1.

Dans un profil d'aube, le bord d'attaque est une portion d'extrémité du profil qui présente un maximum de courbure et qui est située le plus vers l'amont du flux d'air incident. Le bord de fuite est une extrémité du profil qui présente un rayon de courbure minimum et qui est située le plus vers l'aval du flux d'air incident. Le bord d'attaque est une extrémité du profil présentant un minimum local de rayon de courbure et est en général plus proche que le bord de fuite d'une portion du profil présentant la plus grande épaisseur.

Une vanne de mélange selon l'invention permet de mettre à profit les flux d'air pour contrôler au moins une partie -notamment l'intégralité- des volets de la vanne de mélange. En effet, les flux d'air s'exerçant sur les volets sont généralement considérés comme pénalisants vis-à-vis de la commande des volets car les pressions qu'ils exercent sur ces volets peuvent les entrouvrir, un flux d'air non souhaité pouvant ainsi s'introduire dans la vanne de mélange. Or de façon inattendue, les inventeurs ont au contraire déterminé qu'il est en réalité possible d'utiliser et de mettre à profit les pressions et l'énergie aérodynamique, même de faible valeur, qu'exercent les flux d'air sur les volets, pour ouvrir et fermer les volets de façon contrôlée.

Ainsi, l'invention permet d'obtenir, pour la première fois, une vanne de mélange comprenant un dispositif de régulation aéro-commandé fonctionnant au moins pour partie -notamment intégralement- grâce à au moins une partie des flux d'air incidents sur ses volets. Une vanne selon l'invention permet donc de supprimer l'utilisation d'un ou plusieurs organes de commande du déplacement des volets tout en gardant le même niveau de fonctionnalité. Le dispositif de régulation aéro-commandé est ainsi monté sur la paroi et est guidé exclusivement par rapport à la paroi. L'absence d'organes de commande mécaniques permet en particulier d'alléger la vanne de mélange, de la simplifier considérablement, au bénéfice d'une meilleure longévité, d'une meilleure fiabilité, et d'une plus grande durée de vie.

Plus particulièrement, les ouvertures d'une vanne de mélange d'air selon l'invention définissent :
- au moins une entrée d'air, chaque entrée d'air étant adaptée pour transmettre un flux d'air d'entrée dans une chambre de mélange de la vanne délimitée par la paroi de la vanne de mélange, la chambre de mélange étant adaptée pour former au moins un flux d'air de sortie à partir de chaque flux d'air d'entrée,
- au moins une sortie d'air, chaque sortie d'air étant adaptée pour extraire un flux d'air de sortie de la vanne.

Il est à noter cependant que dans certains modes de réalisation de l'invention, une même ouverture de la vanne, dite ouverture d'entrée/sortie d'air, peut être utilisée tantôt comme une entrée d'air, tantôt comme une sortie d'air de la vanne. En particulier, une ouverture d'entrée/sortie d'air est soit une entrée d'air soit une sortie d'air selon la disposition prise par au moins un dispositif de régulation de la vanne.

Ainsi, une vanne comprend soit au moins deux ouvertures d'entrée d'air et au moins une ouverture de sortie d'air, soit au moins une ouverture d'entrée d'air et au moins deux ouvertures de sortie d'air, soit au moins une ouverture d'entrée d'air, au moins une ouverture d'entrée/sortie d'air et au moins une ouverture de sortie d'air. Par ailleurs, un volet profilé d'une vanne selon l'invention est adapté pour que l'énergie aérodynamique d'un flux d'air incident sur ce volet profilé exerce une force aérodynamique sur ce volet profilé apte à entraîner en mouvement d'une part ce volet profilé lui-même, d'autre part chaque volet lié relié au volet profilé par un mécanisme de liaison.

Cette force aérodynamique peut être une force de portance résultant de l'écoulement du flux d'air autour du volet profilé présentant une périphérie définissant une courbe fermée.

En particulier, au moins un volet profilé peut être entraîné en mouvement par une énergie aérodynamique d'un flux d'air, dit flux d'air basse pression, sous une pression statique relative supérieure ou égale à 2 hPa, incident sur ce volet profilé.

Au moins un volet profilé a un profil d'aube à cambrure. Le profil de ce volet profilé est alors non symétrique, et présente du fait de cette cambrure, une face plus concave, dite intrados, que son autre face plus convexe, dite extrados.

Selon l'invention, au moins un volet profilé est cambré de façon à pouvoir former, dans au moins une position d'équilibre aérodynamique de ce volet par rapport à la paroi de la vanne, un passage convergent/divergent de flux d'air entre ce volet et la paroi de la vanne, c'est-à-dire un passage présentant une portion présentant une section efficace diminuant sur sa longueur et prolongée par une portion présentant une section efficace augmentant sur sa longueur. Plus particulièrement, ledit passage convergent/divergent est formé entre l'intrados concave du volet profilé et la paroi de la vanne dans ladite position d'équilibre aérodynamique du volet profilé. Le flux d'air s'accélère, par effet Venturi, dans la portion présentant une section diminuant sur sa longueur de sorte que le flux d'air incident sur le volet profilé est plus rapide sur l'intrados que sur l'extrados. Ainsi, l'effet Venturi permet d'avoir une force aérodynamique sur le volet dirigée de l'extrados vers l'intrados du volet profilé.

Dans certains modes de réalisation avantageux d'une vanne selon l'invention, chaque volet d'un dispositif de régulation -notamment chaque volet d'un dispositif de régulation aéro-commandé- est articulé par rapport à la paroi par une liaison pivot de façon à pouvoir pivoter entre deux positions extrêmes.

Plus particulièrement, chaque volet profilé d'un dispositif de régulation aéro-commandé est articulé à la paroi par une liaison pivot selon un axe de pivot passant au moins sensiblement par un foyer aérodynamique de ce volet profilé. Le foyer aérodynamique d'un volet profilé est défini par le point fixe par rapport auquel le moment de la force aérodynamique est constant et non nul quelle que soit l'incidence du flux d'air incident. Une telle disposition de l'axe de pivot permet d'optimiser la rotation du volet profilé autour de l'axe de pivot. En outre, l'axe de pivot d'un volet profilé est décalé par rapport à un point d'application, dit centre de poussée, de la résultante des forces aérodynamique générées sur ce volet profilé. Ainsi, un flux aérodynamique est apte à entraîner le mouvement de rotation de ce volet profilé vers une position extrême d'ouverture.

En outre, au moins un volet -notamment chaque volet- d'au moins un dispositif de régulation aéro-commandé est associé à une ouverture, dite ouverture associée, présentant une section efficace de passage dont l'aire dépend de la position dudit volet.

Chaque volet d'un dispositif de régulation d'une vanne selon l'invention est guidé par rapport à la paroi et/ou par rapport à au moins un autre volet du dispositif de régulation.

Avantageusement et selon l'invention, au moins un volet -notamment au moins un volet d'un dispositif de régulation aéro-commandé- est associé à une ouverture définissant une entrée d'air ou à une sortie d'air ou bien à une entrée/sortie d'air de la vanne de mélange. Une vanne selon l'invention peut aussi comporter au moins un volet non associé à une ouverture, par exemple un volet -notamment un volet profilé- interposé au coeur de la vanne.

Par ailleurs, dans certains modes de réalisation de l'invention, chaque volet associé à une ouverture d'un dispositif de régulation aéro-commandé, est adapté pour pouvoir pivoter entre une position extrême d'ouverture, permettant à un flux d'air de traverser l'ouverture associée, et une position extrême de fermeture, empêchant au moins pour partie un flux d'air de traverser l'ouverture associée.

En particulier, au moins un volet profilé et au moins un volet lié d'un dispositif de régulation aéro-commandé sont adaptés pour pouvoir être maintenus dans une position exclusivement sous l'effet d'au moins une partie de flux d'air traversant au moins une partie des ouvertures. Ainsi, un volet lié et un volet profilé d'un dispositif de régulation aéro-commandé peut être maintenu dans sa position extrême d'ouverture ou dans sa position extrême de fermeture ou bien en toute position intermédiaire entre sa position extrême d'ouverture et sa position extrême de fermeture.

Plus particulièrement, une vanne selon l'invention présente avantageusement des volets présentant des dimensions similaires à celles des ouvertures de la vanne. De tels volets permettent ainsi d'autoriser ou d'empêcher le passage d'un flux d'air à travers les ouvertures auxquelles ils sont associés. Un dispositif de régulation aéro-commandé selon l'invention permet ainsi de réguler les différents flux d'air. Néanmoins, rien n'empêche de prévoir que la vanne comprenne des volets de dimensions inférieures à celles des ouvertures de la vanne et permettant uniquement de guider le flux d'air.

Les volets d'un même dispositif de régulation d'une vanne selon l'invention peuvent être agencés de façon à être entraînés en mouvement tous dans le même sens (sens d'ouverture ou sens de fermeture) entre leur position extrême d'ouverture et de fermeture, ou au contraire de façon antagoniste en sens opposés les uns des autres deux à deux, ou selon toute autre relation cinématique. Plus particulièrement, dans certains modes de réalisation de l'invention, au moins un volet associé à une ouverture d'un dispositif de régulation aéro-commandé est agencé pour pouvoir être entraîné en pivotement vers une position extrême de fermeture lorsqu'au moins un autre volet d'un même dispositif de régulation aéro-commandé pivote vers une position extrême d'ouverture. Ainsi, dans certains modes de réalisation de l'invention, lorsqu'au moins un premier volet du dispositif aéro-commandé est en position extrême d'ouverture, au moins un deuxième volet du dispositif est en position extrême de fermeture, et inversement.

Par ailleurs, les volets d'un même dispositif de régulation d'une vanne selon l'invention peuvent être agencés de façon à pivoter tous dans le même sens de rotation, ou au contraire en sens de rotation opposés les uns des autres deux à deux, ou selon toute autre relation cinématique. Plus particulièrement, dans certains modes de réalisation de l'invention, au moins un volet d'un dispositif de régulation aéro-commandé est agencé pour pivoter dans le même sens de rotation qu'au moins un autre volet du même dispositif de régulation aéro-commandé.

Un dispositif de régulation aéro-commandé selon l'invention peut donc permettre d'empêcher un flux d'air, provenant de l'ouverture à laquelle un premier volet ouvert du dispositif de régulation aéro-commandé est associé, de traverser l'ouverture à laquelle un deuxième volet fermé du dispositif de régulation aéro-commandé est associé.

Dans certains modes de réalisation selon l'invention, le mécanisme de liaison entre les volets d'un dispositif de régulation aéro-commandé comprend au moins une bielle reliant deux volets de ce dispositif de régulation aéro-commandé.

Un mécanisme de liaison à bielle(s) présente une structure simple et est peu encombrant. Dans certains modes de réalisation avantageux, une bielle présente une première extrémité assemblée -notamment articulée- à un volet du dispositif de régulation aéro-commandé et une deuxième extrémité assemblée -notamment articulée- à un autre volet de ce même dispositif de régulation aéro-commandé.

Dans certains autres modes de réalisation, le mécanisme de liaison comprend une bielle principale et deux bielles secondaires, dites biellettes, de dimensions inférieures à celles de la bielle principale. En particulier, une première extrémité de chaque biellette est assemblée à un volet du dispositif de régulation. En outre, chaque extrémité de la bielle principale est assemblée - notamment articulée- à une deuxième extrémité d'une biellette.

Plus particulièrement, dans certains modes de réalisation de l'invention, la liaison pivot d'articulation de chaque volet à la paroi, et une liaison d'articulation de chaque volet au mécanisme de liaison, sont des liaisons pivot selon des axes parallèles et décalés l'un par rapport à l'autre.

Dans certains modes de réalisation, la distance entre l'axe de la liaison pivot d'articulation d'un premier volet à la paroi et l'axe de la liaison d'articulation de ce premier volet au mécanisme de liaison est différente de la distance entre l'axe de la liaison pivot d'articulation d'un deuxième volet, d'un même dispositif de régulation aéro-commandé, à la paroi et l'axe de la liaison d'articulation de ce deuxième volet au mécanisme de liaison. Ainsi, le premier volet et le deuxième volet sont entraînés en mouvement selon des angles différents par rapport à leurs positions extrêmes d'ouverture et de fermeture. Néanmoins, rien n'empêche, en variante, de prévoir que la distance entre l'axe de la liaison pivot d'articulation d'un premier volet à la paroi et l'axe de la liaison d'articulation de ce premier volet au mécanisme de liaison soit égale à la distance entre l'axe de la liaison pivot d'articulation d'un deuxième volet (du même dispositif de régulation aéro-commandé) à la paroi et l'axe de la liaison d'articulation de ce deuxième volet au mécanisme de liaison.

Par ailleurs l'invention s'applique à toutes possibilités d'agencements respectifs des volets les uns par rapport aux autres et par rapport aux différentes ouvertures de la vanne.

Dans certains modes de réalisation une vanne selon l'invention comprend un unique dispositif de régulation aéro-commandé qui peut être le seul dispositif de régulation de la vanne. En outre, en variante ou en combinaison, une vanne selon certains modes de réalisation de l'invention comprend un unique volet profilé associé à une ouverture -c'est à dire agencé pour pouvoir recevoir un flux d'air traversant cette ouverture en entrée ou en sortie-destinée à recevoir un flux d'air basse pression en entrée.

En outre dans certains modes de réalisation selon l'invention chaque volet lié à un volet profilé est associé à une ouverture distincte d'une ouverture à laquelle le volet profilé est associé.

Dans certains modes de réalisation une vanne selon l'invention comprend un dispositif de régulation aéro-commandé choisi dans le groupe comprenant :
- un dispositif de régulation aéro-commandé comprenant un volet profilé et un volet lié, ces deux volets étant relié par un mécanisme à au moins une - notamment une unique- bielle articulée aux volets,
- un dispositif de régulation aéro-commandé comprenant un volet profilé et deux volets liés, ces volets étant reliés par un mécanisme à bielles articulées aux volets,
- un dispositif de régulation aéro-commandé comprenant deux volets profilés et un volet lié, ces volets étant reliés par un mécanisme à bielles articulées aux volets,
- un dispositif de régulation aéro-commandé comprenant deux volets profilés et deux volets liés, ces volets étant reliés par un mécanisme à bielles articulées aux volets.

Dans certains modes de réalisation une vanne selon l'invention comprend un dispositif de régulation aéro-commandé comprenant un volet profilé et un volet lié, ces deux volets étant associés à deux ouvertures différentes -notamment deux ouvertures destinées à recevoir des flux d'air en entrée- de la vanne.

Cela étant rien n'empêche de prévoir plusieurs volets - profilé(s) ou non- associés à une même ouverture de la vanne, et/ou un même volet -profilé ou non- associé à plusieurs ouvertures de la vanne, par exemple articulé à la paroi entre deux ouvertures pour, dans une position, fermer une première ouverture et laisser une deuxième ouverture ouverte, et dans une autre position, ouvrir la première ouverture et fermer la deuxième ouverture.

D'autres variantes et combinaisons d'agencements sont possibles.

Plus particulièrement, dans un mode de réalisation avantageux, la vanne de mélange comprend au moins une butée permettant de limiter la rotation d'au moins un volet d'un dispositif de régulation dans un sens autour de l'axe de la liaison pivot d'articulation du volet à la paroi.

De telles butées peuvent permettre de définir les positions extrêmes des volets. Ainsi, une butée définissant une position extrême de fermeture d'un volet sera placée sur la paroi au voisinage de l'ouverture associée au volet. Plus particulièrement, dans certains modes de réalisation avantageux, la butée est disposée pour recevoir et bloquer l'extrémité d'un volet la plus éloignée du pivot lorsque le volet est en position extrême de fermeture.

L'invention s'étend également à un système de conditionnement d'air comprenant au moins une vanne de mélange d'air selon l'invention.

Plus particulièrement, un système de conditionnement d'air selon l'invention comprend au moins un dispositif générateur de flux d'air susceptible d'être commandé entre au moins deux états différents dans lesquels il génère des flux d'air de caractéristiques différentes, dont au moins un état dans lequel il génère un débit non nul de flux d'air. Un tel dispositif générateur de flux d'air susceptible d'être commandé peut être un ventilateur ou toute autre source de débit d'air pouvant être commandée entre au moins deux états différents. Un tel dispositif générateur de flux d'air susceptible d'être commandé peut être commandé à partir d'un automatisme de commande, par exemple électronique et/ou informatique. Un tel automatisme de commande peut incorporer par exemple un dispositif de régulation de température.

Dans certains modes de réalisation avantageux, un système de conditionnement d'air selon l'invention comprend au moins un dispositif générateur de flux d'air -susceptible d'être commandé ou non- apte à générer un flux d'air basse pression pouvant exercer une force aérodynamique sur au moins un volet profilé d'un dispositif de régulation aéro-commandé d'une vanne de mélange d'air.

En particulier, un système de conditionnement d'air selon l'invention comprend un dispositif générateur de flux d'air adapté pour générer un flux d'air basse pression s'introduisant dans la vanne de mélange par au moins une ouverture associée à un volet profilé d'un dispositif de régulation aéro-commandé selon l'invention afin de contrôler l'ouverture et la fermeture de ce volet profilé sur lequel s'exercent des forces aérodynamiques du flux d'air produit par le dispositif générateur de flux d'air. En outre, de préférence, le débit du flux d'air basse-pression généré par le dispositif générateur de flux d'air est supérieur au débit des flux d'air provenant d'autres ouvertures d'entrée d'air de la vanne.

L'invention s'étend également à un véhicule comprenant un système de conditionnement d'air selon l'invention.

L'invention concerne également une vanne de mélange d'air, un système de conditionnement d'air et un véhicule caractérisés en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est une vue schématique en perspective d'une vanne de mélange selon un premier mode de réalisation de l'invention,
- la figure 2 est une vue schématique de côté de la vanne de mélange de la figure 1,
- la figure 3 est une vue schématique en coupe axiale de la vanne de mélange de la figure 1, un volet profilé d'un dispositif de régulation étant en position extrême de fermeture et un volet lié du même dispositif de régulation étant en position extrême d'ouverture,
- la figure 4 est une vue schématique en coupe axiale de la vanne de la figure 1, les deux volets du dispositif de régulation étant en position intermédiaire de rotation,
- la figure 5 est une vue schématique en coupe axiale de la vanne de la figure 1, le volet profilé du dispositif de régulation étant en position extrême d'ouverture et le volet lié du même dispositif de régulation étant en position extrême de fermeture,
- la figure 6 est une vue schématique en coupe transversale selon la ligne VI-VI de la figure 4,
- les figures 7 à 12 sont des schémas d'autres modes de réalisation d'une vanne selon l'invention.

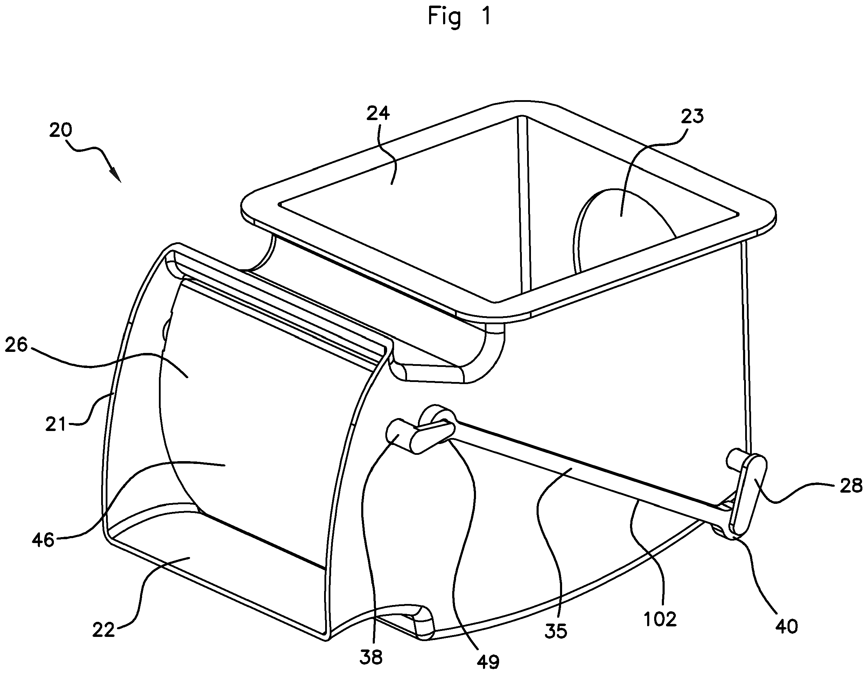

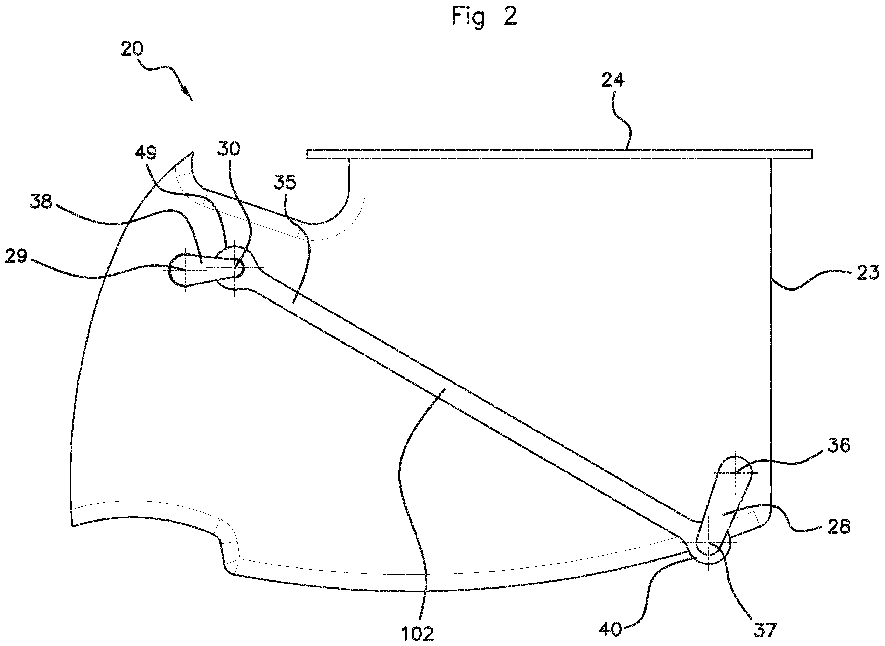

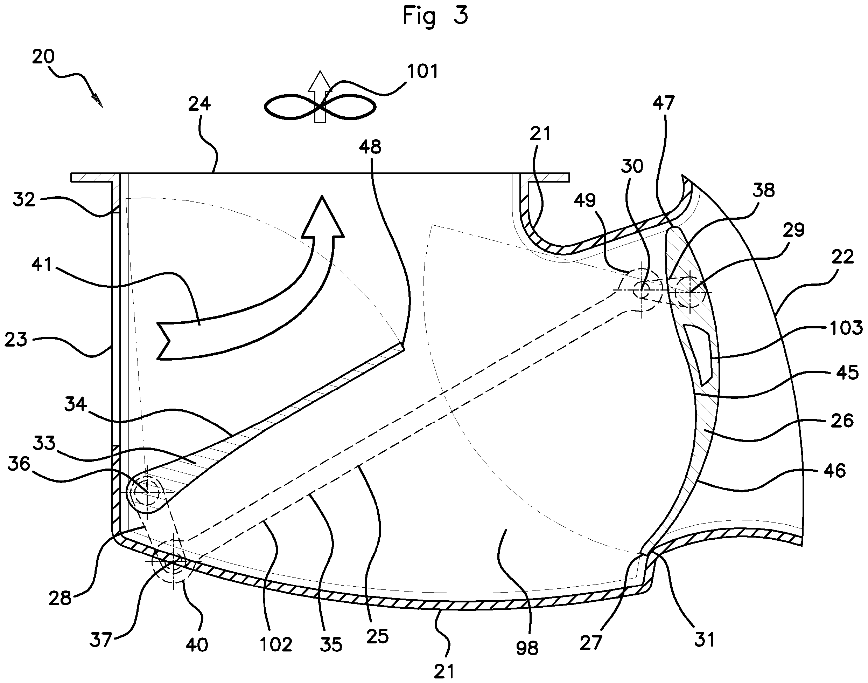

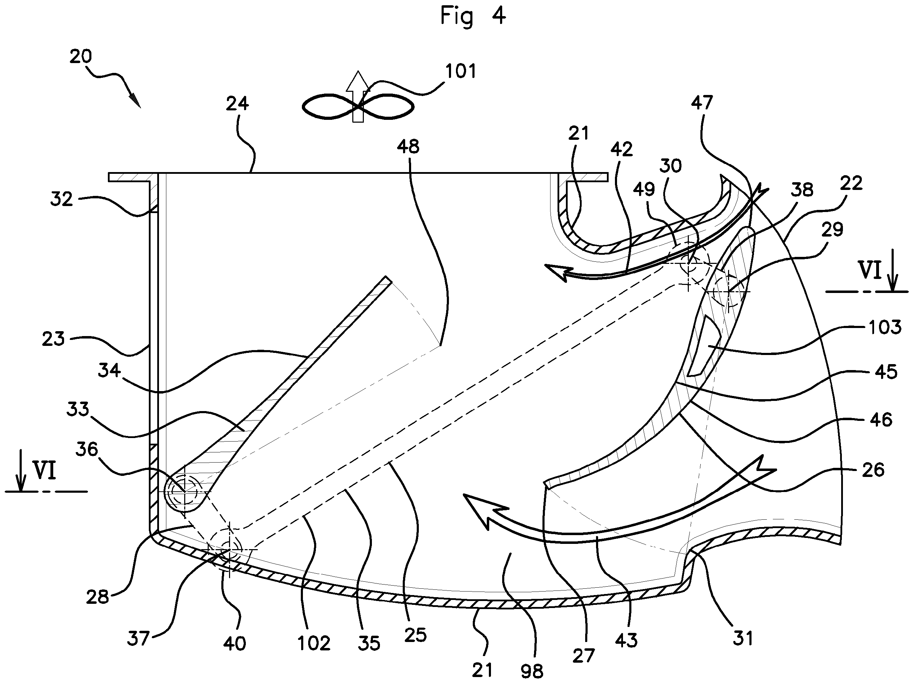

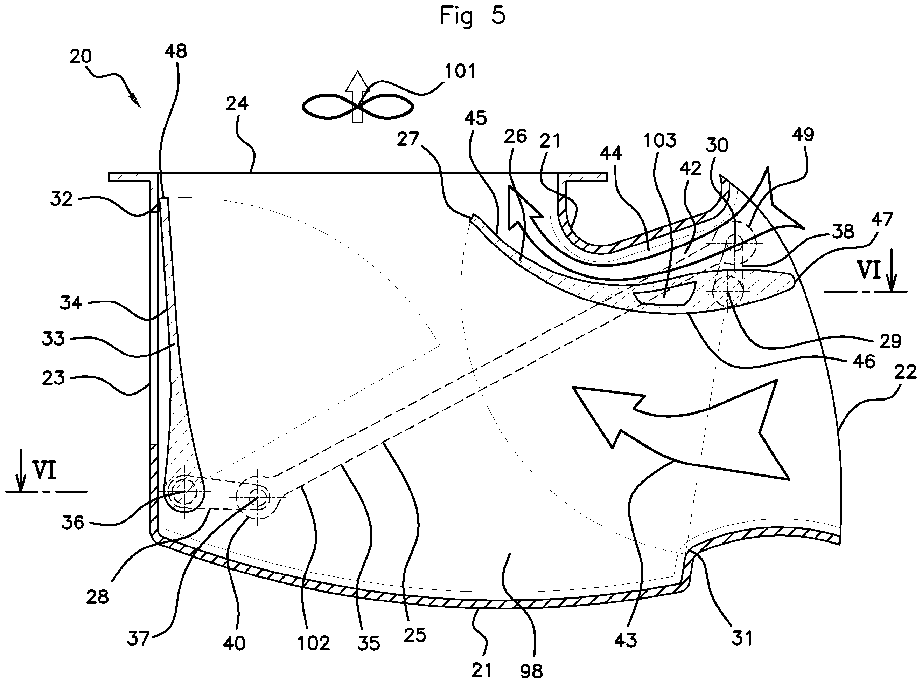

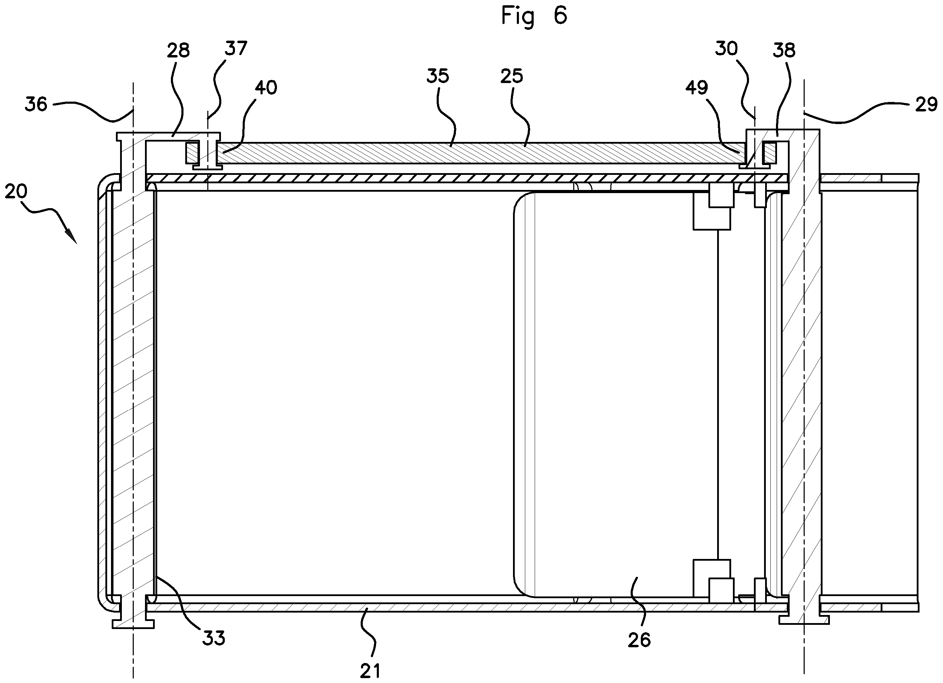

Une vanne 20 de mélange d'air selon l'invention, représentée selon un premier mode de réalisation aux figures 1 à 6, comprend une paroi 21 délimitant une chambre 98 de mélange et présentant trois ouvertures 22, 23, 24. La chambre 98 de mélange est formée à l'intérieur de la vanne 20 de mélange entre les ouvertures 22, 23, 24 de la vanne 20.

Par exemple, chaque ouverture 22, 23, 24 peut être raccordée à un conduit de ventilation d'un système de conditionnement d'air ou bien déboucher directement sur un espace clos à climatiser. Plus particulièrement, le système de conditionnement d'air peut comprendre différents organes (tels qu'un échangeur de chaleur, un dispositif de pressurisation, un réservoir d'oxygène...) permettant de guider et de réguler au moins un flux d'air jusqu'à une ou plusieurs sorties débouchant sur un espace clos à climatiser tel qu'une cabine d'un véhicule, une pièce close ou autre.

Chaque ouverture 22, 23, 24 de la vanne 20 peut ainsi être traversée par un flux d'air. Une vanne 20 de mélange permet ainsi de mélanger et/ou guider un ou plusieurs flux d'air, dits flux d'air d'entrée, provenant d'une ou plusieurs ouvertures utilisées comme entrées de flux d'air, et d'extraire par une ou plusieurs ouvertures utilisées comme sorties d'air le flux d'air de mélange formé dans une chambre 98 de mélange de la vanne 20 de mélange, dit flux d'air de sortie. Néanmoins, rien n'empêche une même ouverture d'être utilisée comme entrée et sortie d'air.

Par exemple, dans le mode de réalisation représenté aux figures 1 à 6, les ouvertures 22 et 23 de la vanne 20 de mélange sont des entrées d'air et l'ouverture 24 de la vanne 20 de mélange est une sortie d'air. Le flux d'air de sortie peut ainsi être issu d'un unique flux d'air d'entrée ou bien être formé d'un mélange de plusieurs flux d'air d'entrée pénétrant dans la chambre 98 de mélange par les ouvertures 22 et 23.

Plus particulièrement, l'ouverture 23 peut être traversée par un flux 41 d'air s'écoulant vers la chambre 98 de mélange. En outre, l'ouverture 22 peut être traversée par un flux 42, 43 d'air d'entrée s'écoulant vers la chambre 98 de mélange. En outre, d'autres flux d'air d'entrée peuvent être transmis à la vanne 20 de mélange par les autres ouvertures d'entrée d'air de la vanne 20 de mélange, telle que l'ouverture 23. Chaque flux d'air d'entrée peut, par exemple, être un flux d'air frais, un flux d'air chaud, ces flux pouvant être des flux d'air de recirculation provenant de l'espace clos à climatiser tel qu'une cabine d'avion ou bien de l'extérieur de cet espace clos. Ainsi, une ouverture d'entrée d'air peut, par exemple, être reliée à un conduit d'air chaud, ou à un conduit d'air frais, ces deux conduits pouvant être des conduits de recirculation reliés à l'espace clos à climatiser telle qu'une cabine d'avion ou bien des conduits reliés à l'extérieur de cet espace clos. La circulation des flux d'air à travers la vanne 20 de mélange est assurée par au moins un dispositif 101 générateur de flux d'air du système de conditionnement d'air, par exemple un dispositif 101 générateur de flux d'air pouvant être placé dans un conduit raccordé à l'ouverture 24 de sortie, immédiatement à l'aval de cette dernière comme représenté sur les figures 1 à 6. Le dispositif 101 générateur de flux d'air peut être un ventilateur ou toute autre source de débit d'air susceptible d'être commandée telle qu'une source d'air extérieur pilotée par une électrovanne ou une source d'air sous pression en provenance d'une turbomachine ou autre.

Par ailleurs, la vanne 20 de mélange comprend un dispositif 25 de régulation aéro-commandé comprenant deux volets 26, 33 associés respectivement aux deux ouvertures 22, 23 d'entrée de la vanne 20 de mélange. Un premier volet 26 associé à l'ouverture 22 d'entrée de la vanne 20 est un volet profilé. Le deuxième volet 33, dit volet 33 lié, est relié au volet 26 profilé par au moins une bielle 35 formant un mécanisme 102 de liaison entre ces deux volets. Le volet 33 lié est associé à la deuxième ouverture 23 d'entrée de la vanne 20 de mélange.

Afin d'associer les volets 26, 33 aux ouvertures 22, 23, chaque volet est relié à la paroi 21 de la vanne 20 de mélange à proximité de l'ouverture 22 ou 23 à laquelle il est associé. Plus particulièrement, chaque volet est relié à la paroi 21 de la vanne 20 de mélange par une liaison pivot selon un axe, dit axe de pivot. Ainsi, le volet 26 profilé est relié à la paroi 21 de la vanne 20 de mélange par une liaison pivot selon un axe 29 de pivot et le volet 33 lié est relié à la paroi 21 de la vanne 20 de mélange par une liaison pivot selon un axe 36 de pivot. Les axes 29, 36 de pivot des deux volets 26, 33 sont au moins sensiblement parallèles l'un à l'autre. De préférence, l'axe 29 de pivot du volet 26 profilé est orienté de façon à être au moins sensiblement orthogonal à la direction du flux d'air qu'il reçoit par l'ouverture 22 d'entrée. De même, l'axe 36 de pivot du volet 33 lié est orienté de façon à être au moins sensiblement orthogonal à la direction du flux d'air qu'il reçoit par l'ouverture 23 d'entrée.

En outre, chaque volet présente une bordure périphérique dont la forme est conjuguée avec celle de la paroi 21 de la vanne 20 délimitant l'ouverture 22 ou 23 à laquelle le volet est associé de façon à pouvoir boucher, en position de fermeture, l'ouverture 22 ou 23 à laquelle le volet est associé. Ainsi, un tel volet est adapté pour empêcher un flux d'air de traverser l'ouverture 22 ou 23 à laquelle le volet est associé. Chaque volet est apte à pivoter entre une position extrême d'ouverture permettant un flux d'air de traverser l'ouverture à laquelle il est associé et une position extrême de fermeture, empêchant un flux d'air de traverser l'ouverture à laquelle il est associé. Ainsi, de tels volets peuvent permettre à un flux d'air d'accéder à la vanne 20 de mélange ou de quitter la vanne 20 de mélange.

En particulier, le mécanisme 102 de liaison entre les volets 26, 33 est formé d'une bielle 35 principale et deux bielles 28, 38 secondaires, dites biellettes, de dimensions inférieures à celles de la bielle principale. Plus particulièrement, une première extrémité de la biellette 28 est assemblée solidaire en rotation au volet 33 lié du dispositif de régulation et une première extrémité de la biellette 38 est assemblée solidaire en rotation au volet 26 profilé du dispositif de régulation. En outre, une première extrémité 40 de la bielle 35 principale est assemblée à une deuxième extrémité de la biellette 28 par une liaison pivot selon un axe, dit axe 37 de bielle, parallèle à l'axe 36 de pivot. Une deuxième extrémité 49 de la bielle 35 principale est assemblée à une deuxième extrémité de la biellette 38 par une liaison pivot selon un axe, dit axe 30 de bielle, parallèle à l'axe 29 de pivot. Par ailleurs, l'axe 30 de bielle est placé à une distance non nulle de l'axe 29 de pivot du volet 26 profilé. En outre, l'axe 37 de bielle est placé à une distance non nulle de l'axe 36 de pivot du volet 33 lié.

La bielle 35 ainsi que les biellettes 28 et 38 sont des tiges rigides.

Dans le mode de réalisation représenté et de préférence, le mécanisme 102 de liaison (bielle 35 et biellettes 28, 38) s'étend à l'extérieur de la chambre 98 de mélange.

Néanmoins, rien n'empêche, en variante non représentée, de placer le mécanisme 102 de liaison (bielle 35 et biellettes 28, 38) entre les volets à l'intérieur de la chambre 98 de mélange de la vanne 20 de mélange. Plus particulièrement, lorsque le mécanisme 102 de liaison est placé à l'intérieur de la chambre 98 de mélange, la bielle 35 présente, dans au moins une direction transversale à la direction de circulation des flux d'air dans la vanne 20 de mélange, une largeur aussi faible que possible, de façon à perturber le moins possible cette circulation.

En outre, les biellettes 28, 38 du mécanisme 102 de liaison peuvent être placées à l'intérieur de la chambre 98 de mélange et la bielle 35 à l'extérieur de la vanne 20 de mélange. Rien n'empêche également de placer la bielle 35 à l'intérieur de la vanne 20 de mélange et les biellettes 28, 38 à l'extérieur de la vanne 20 de mélange (en prévoyant des liaisons appropriées à travers des ouvertures de la paroi).

Avantageusement et selon l'invention, le volet 26 profilé présente un profil d'aube à cambrure définissant un bord 47 d'attaque, un bord 27 de fuite, un intrados 45 plus concave et un extrados 46 plus convexe. En outre, le volet 26 profilé présente une épaisseur non constante entre son bord d'attaque et son bord de fuite.

Le flux d'air incident sur le volet 26 profilé se sépare au niveau du bord 47 d'attaque en un flux 42 d'air s'écoulant le long de l'intrados 45 et un flux 43 d'air s'écoulant le long de l'extrados 46 du volet. L'énergie aérodynamique du flux d'air incident sur le volet 26 profilé permet ainsi d'exercer une force aérodynamique sur ce volet 26 profilé de façon à l'entraîner en rotation vers la position extrême d'ouverture, alors même que le flux d'air d'entrée incident sur le volet 26 profilé est un flux d'air, dit flux d'air basse pression, de pression statique relative supérieure ou égale à 2 hPa. Par exemple, le volet 26 profilé est adapté pour pouvoir être entraîné en mouvement par un flux d'air de pression statique relative comprise entre 5 hPa et 10 hPa.

En outre, une force aérodynamique sur le volet 26 profilé peut également résulter d'un effet Venturi pouvant être formé par un passage 44 de flux 42 d'air convergent, présentant une forme d'étranglement, c'est-à-dire un passage 44 ayant une section efficace qui diminue sur sa longueur vers l'aval (dans le sens de circulation du flux d'air), notamment entre le volet 26 profilé et la paroi 21 de la vanne de mélange, dans lequel le flux d'air s'accélère. En particulier, ce passage 44 est formé lorsque le volet 26 profilé est en position extrême d'ouverture entre l'intrados 45 du volet 26 profilé et une portion en regard de la paroi 21. Cet effet Venturi génère une portance dirigée de l'intrados 45 vers la paroi 21 de la vanne 20 de mélange. Cet effet Venturi permet au moins en partie de maintenir le volet 26 profilé dans cette position extrême d'ouverture. L'effet Venturi permet également d'accélérer le flux d'air en sortie vers l'ouverture 24 de sortie et de faciliter l'évacuation de ce flux d'air hors de la chambre 98 de mélange.

En outre, le volet 26 profilé est entraîné en rotation vers sa position extrême d'ouverture lorsque la division du couple appliqué sur l'axe 29 de pivot du volet 26 profilé et engendré par la force aérodynamique exercée par le flux 42, 43 d'air sur le volet 26 profilé par la longueur de la biellette 38 est supérieure à la division du couple appliqué sur l'axe 36 de pivot du volet 33 lié et engendré par une force aérodynamique exercée par le flux 41 d'air sur le volet 33 lié par la longueur de la biellette 28. Le mouvement du volet 26 profilé peut donc être obtenu en ajustant la différence de longueur des biellettes 28, 38. Ainsi, en fonction du couple appliqué sur l'axe 29 de pivot du volet 26 profilé et du couple appliqué sur l'axe 36 de pivot du volet 33 lié, les longueurs des biellettes 28, 38 peuvent être choisies de façon à être égales ou différentes de telle sorte que la longueur de la biellette 28 peut être supérieure ou inférieure à la longueur de la biellette 38.

En particulier, dans les modes de réalisation de l'invention dans lesquels les biellettes 28, 38 présentent une même longueur, le volet 26 profilé est entraîné en rotation vers sa position extrême d'ouverture lorsqu'une force s'exerçant sur la biellette 38 sous l'effet de la force aérodynamique exercée par les flux 42, 43 sur le volet 26 profilé est supérieure à une force s'exerçant sur la biellette 28 sous l'effet de la force aérodynamique exercée par le flux 41 d'air sur le volet 33 lié.

Dans certains modes de réalisation, la distance entre l'axe 29 de pivot du volet 26 profilé et l'axe 30 de bielle de ce même volet est différente de celle du volet 33 lié. Ainsi, le volet 26 profilé et le volet 33 lié sont entraînés en mouvement par le mécanisme 102 de liaison selon des angles différents par rapport à leurs positions extrêmes d'ouverture et de fermeture.

En outre, l'axe 29 de pivot du volet 26 profilé passe au moins sensiblement par le foyer aérodynamique de ce volet 26 profilé (ie. le point fixe par rapport auquel le moment de la force aérodynamique est constant et non nul quelle que soit l'incidence du flux d'air incident). Une telle disposition de l'axe 29 de pivot permet d'optimiser la rotation du volet 26 profilé autour de l'axe de pivot. En outre, l'axe 29 de pivot est décalé par rapport au centre de poussée du volet 26 profilé (ie. le point d'application de la résultante des forces de pression/dépression générées par l'intrados et l'extrados de l'aile) lorsque celui-ci est en position extrême de fermeture de façon à entraîner le mouvement de rotation de ce volet 26 profilé vers la position extrême d'ouverture.

Lorsque le volet 26 profilé est en position extrême de fermeture, l'extrados 46 du volet 26 profilé est orienté vers l'ouverture 22 à laquelle le volet est associé, et l'intrados 45 est orienté vers la chambre 98 de mélange de la vanne 20 de mélange. Néanmoins, rien n'empêche d'avoir, en position extrême de fermeture, l'extrados 46 du volet 26 profilé orienté vers la chambre 98 de mélange de la vanne 20 de mélange, et l'intrados 45 orienté vers l'ouverture 22 à laquelle le volet 26 profilé est associé.

Par ailleurs, au moins une position extrême de chaque volet peut être définie par une butée formée par la paroi 21 et contre laquelle le volet vient dans cette position extrême. Une butée peut être placée sur la vanne de sorte qu'une partie d'un volet 26, 33 puisse être mis en contact contre cette butée de façon à bloquer le mouvement de ce volet 26, 33. Ainsi, dans certains modes de réalisation, une butée est placée de façon à ce qu'une extrémité d'un volet 26, 33 présentant le bord de fuite de ce volet ou bien le bord d'attaque de ce volet, puisse être mise en contact avec cette butée. Néanmoins, rien n'empêche d'avoir une butée placée de façon à ce qu'une portion au milieu d'un côté d'un volet 26, 33 puisse être mise en contact avec cette butée. En outre, dans certains modes de réalisation avantageux, un volet 26, 33 rentre en contact avec la butée en un unique point afin de minimiser le bruit du claquement.

Une nervure 31 de la paroi 21 en saillie à l'intérieur de la vanne 20 de mélange sert de butée pour la position extrême de fermeture du volet 26 profilé. Ainsi, lorsque le volet 26 profilé est en position extrême de fermeture, son bord 27 de fuite est en contact avec la nervure 31. Une butée pour la position extrême de fermeture du volet 33 lié est formée par un repli 32 de la paroi 21 vers l'intérieur de la vanne 20 de mélange. Ainsi, lorsque le volet 33 lié est en position extrême de fermeture, une face 34 du volet 33 lié en regard de l'ouverture 23 est en contact avec le repli 32 au niveau du bord 48 de fuite du volet 33 lié.

Par ailleurs, la distance entre l'axe 29 de pivot et l'axe 30 de bielle, la distance entre l'axe 36 de pivot et l'axe 37 de bielle ainsi que la longueur de la bielle doivent être conçues pour éviter de bloquer et maintenir le dispositif 25 de régulation aéro-commandé dans une même position. Pour cela, l'angle formé entre la biellette 28 et la bielle 35 ne doit, par exemple, jamais atteindre, entre la position d'extrême d'ouverture et la position extrême de fermeture incluses de chaque volet 26, 33, la valeur angulaire de 0° ou 180° correspondant à des positions limites ne permettant pas au volets 26, 33 de se déplacer lorsqu'elles sont atteintes. De même, l'angle formé entre la biellette 38 et la bielle 35 ne doit, par exemple, jamais atteindre la valeur angulaire de 0° ou 180° correspondant aux positions limites définissant chacune une position dans laquelle les volets 26, 33 ne pourront pas être entraînés en rotation dans un sens de rotation opposé. Une butée peut alors être placée de façon à bloquer le mouvement dans un sens de rotation d'un premier volet 26, 33 d'un dispositif 25 de régulation aéro-commandé entre ses positions limites.

Le volet 26 profilé est adapté pour pivoter vers la position extrême d'ouverture lorsque le dispositif 101 générateur de flux d'air est actif. Plus particulièrement, le flux d'air entrant dans l'ouverture 22 sous l'effet du dispositif 101 générateur de flux d'air est incident sur le volet 26 profilé. L'énergie aérodynamique de ce flux d'air 43, 42 incident sur le volet 26 profilé entraîne en rotation le volet 26 profilé vers une position extrême d'ouverture.

Le mécanisme 102 de liaison permet de transmettre les efforts mécaniques du mouvement du volet 26 profilé au volet 33 lié et de l'entraîner en rotation sous l'effet du déplacement en rotation du volet 26 profilé. Ainsi, les volets 26 et 33 du dispositif 25 de régulation aéro-commandé peuvent pivoter conjointement sous l'effet de l'énergie aérodynamique du flux d'air s'exerçant sur le volet 26 profilé.

Le débit du flux d'air généré par le dispositif 101 générateur de flux d'air à la sortie de la vanne 20 de mélange est adapté pour tenir compte des pertes de charge induites dans la vanne 20 de mélange. Le dispositif 101 générateur de flux d'air peut être commandé et actionné par un automatisme de régulation du système de conditionnement d'air. En outre, le dispositif 101 générateur de flux d'air peut être choisi de façon à permettre de générer différents débits de flux d'air, pouvant varier de façon continue ou de façon discrète. Ainsi, le dispositif 101 générateur de flux d'air peut être commandé afin d'ajuster le débit de flux d'air pour pouvoir placer les volets 26, 33 du dispositif 25 de régulation aéro-commandé dans au moins une position intermédiaire entre leur position extrême d'ouverture et leur position extrême de fermeture. En particulier, lorsque les volets 26, 33 sont placés selon une position intermédiaire, les flux d'air 41 et 42, 43 se mélangent. Cette position intermédiaire peut être maintenue grâce à un équilibre des forces aérodynamiques s'exerçant respectivement par les flux d'air 42 et 43, et 41 sur les volets 26, 33 respectivement.

Dans certains modes de réalisation, le flux 42, 43 d'air, peut être un flux d'air recyclé à partir du flux d'air sortant de la vanne 20 de mélange par l'ouverture 24 de sortie d'air, par exemple après un passage de ce dernier flux d'air dans l'espace clos à climatiser.

Dans le premier mode de réalisation représenté aux figures 1 à 6, le volet 26 profilé et le volet 33 lié pivotent conjointement dans le même sens de rotation mais de façon antagoniste par rapport à leurs positions extrêmes et à leurs sens d'ouverture et de fermeture de sorte que lorsque le volet 26 profilé pivote vers une position extrême de fermeture, le volet 33 lié pivote vers une position extrême d'ouverture ou inversement.

Dans le premier mode de réalisation représenté, le volet 33 lié ne présente pas de cambrure mais un profil symétrique. Néanmoins, rien n'empêche d'avoir un volet 33 lié présentant un profil d'aube.

En position extrême de fermeture, le volet 33 lié s'étend transversalement à l'ouverture 23 et reçoit de cette dernière un flux d'air sous une pression suffisante pour faire pivoter le volet 33 lié et l'entraîner vers sa position extrême d'ouverture, le volet 33 lié entraînant alors le volet 26 profilé en rotation vers sa position extrême de fermeture par l'intermédiaire de la bielle 35 de liaison, lorsque le dispositif 101 générateur de flux d'air est interrompu.

Ainsi, le dispositif de régulation aéro-commandé de ce premier mode de réalisation fonctionne de la façon suivante.

Lorsque le dispositif 101 générateur de flux d'air est arrêté, c'est-à-dire commandé à l'état inactif, un flux 41 d'air alimenté à l'entrée 23 de la vanne entraîne le volet 33 lié vers sa position extrême d'ouverture et le volet 26 profilé vers sa position extrême de fermeture. Dans cette phase, le volet 33 lié est un volet menant et le volet 26 profilé est un volet mené. Le volet 26 profilé est un volet anti-retour qui empêche le flux d'air entrant par l'ouverture 23 d'entrée du volet 33 lié de passer vers l'autre ouverture 22 d'entrée à laquelle le volet 26 profilé est associé. Ce flux d'air entrant par l'ouverture 23 d'entrée est donc acheminé directement vers l'ouverture 24 de sortie.

Lorsque le dispositif 101 générateur de flux d'air est mis en route, c'est-à-dire commandé à l'état actif, un flux d'air d'entrée généré dans l'ouverture 22 d'entrée et incident sur le volet 26 profilé exerce sur ce volet 26 profilé un moment de pivotement de valeur suffisante pour entraîner en rotation le volet 26 profilé et le volet 33 lié, à l'encontre du flux 41 d'air d'entrée encore reçu à l'ouverture 23 d'entrée sur le volet 33 lié, et les forces aérodynamiques décrites ci-dessus exercées par ce flux d'air incident basse pression sur le volet 26 profilé sont suffisantes pour permettre ce mouvement de pivotement des deux volets 26, 33, ce par quoi le volet 26 profilé se déplace vers sa position extrême d'ouverture et le volet 33 lié se déplace vers sa position extrême de fermeture.

Les volets 26, 33, et la bielle 35 du dispositif de régulation aéro-commandé de la vanne selon l'invention peuvent être réalisés en tout matériau approprié, aussi léger et rigide que possible permettant ainsi une sensibilité plus importante à la force aérodynamique qu'exercent les flux d'air sur les volets et donc de faire pivoter les volets d'un dispositif de régulation aéro-commandé avec un flux d'air minimisé.

Par ailleurs, dans certains modes de réalisation, un volet 26 profilé peut comprendre un évidement 103 permettant d'alléger ce volet et de déplacer son centre de gravité vers son bord 47 d'attaque.

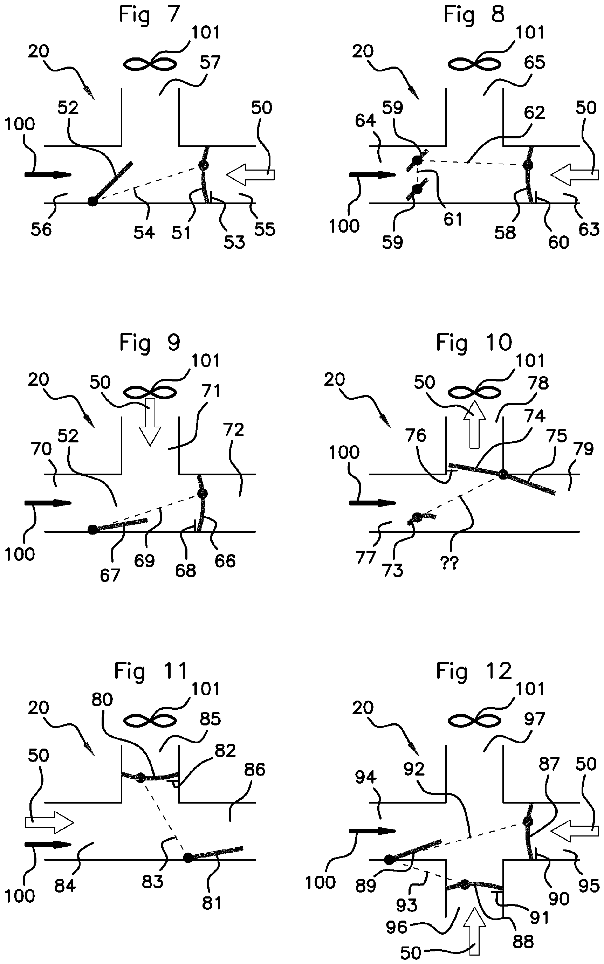

Dans un deuxième mode de réalisation représenté à la figure 7, la vanne 20 de mélange présente deux ouvertures 55, 56 d'entrée d'air et une ouverture 57 de sortie d'air.

Un dispositif de régulation est associé aux deux ouvertures 55, 56 d'entrée d'air. En particulier, le dispositif de régulation comprend un volet 52 lié associé à l'ouverture 56 d'entrée d'air et un volet 51 profilé associé à l'ouverture 55 d'entrée d'air. Une bielle 54 relie les volets 51, 52 du dispositif de régulation de sorte que les volets 51, 52 pivotent de façon antagoniste.

Le dispositif 101 générateur de flux d'air permet de générer un flux d'air 50 arrivant à l'ouverture 55 d'entrée d'air de la vanne 20.

Le dispositif 101 générateur de flux d'air est initialement commandé à l'arrêt, inactif. Le volet 51 profilé est initialement dans une position de fermeture dans laquelle son côté intrados est orienté vers l'ouverture 55 et son extrémité présentant le bord de fuite du volet 51 profilé est placée contre une butée 53 de la vanne 20 du côté intrados. Le volet 52 lié est initialement dans une position extrême d'ouverture laissant ainsi un flux 100 d'air d'entrée s'introduire dans la chambre 98 de mélange de la vanne 20.

Le volet 51 profilé empêche initialement ce dernier flux 100 d'air de traverser l'ouverture 55, le flux 100 d'air provenant de l'ouverture 56 d'entrée d'air est acheminé uniquement à l'ouverture 57 de sortie d'air.

Lorsque le dispositif 101 générateur de flux d'air est commandé à l'état actif, le flux 50 d'air généré par le dispositif 101 générateur de flux d'air présentant un débit supérieur au débit du flux 100 d'air d'entrée passant par l'ouverture 56 associée au volet 52 lié, exerce une force aérodynamique sur le volet 51 profilé de sorte que ce volet 51 profilé pivote vers une position extrême d'ouverture pour laisser passer le flux 50 d'air généré par le dispositif 101 générateur de flux d'air dans la chambre 98 de mélange de la vanne 20 via l'ouverture 55 associée à ce volet 51 profilé. La rotation vers une position extrême d'ouverture du volet 51 profilé permet de fermer le volet 52 lié de sorte qu'il empêche le flux 100 d'air de s'introduire dans la chambre 98 de mélange par l'ouverture 56 associée au volet 52 lié. Le flux 50 d'air généré par le dispositif 101 générateur de flux d'air est ainsi acheminé dans la vanne uniquement à l'ouverture 57 de sortie d'air.

Dans un troisième mode de réalisation représenté à la figure 8, la vanne 20 de mélange présente également deux ouvertures 63, 64 d'entrée d'air et une ouverture 65 de sortie d'air et un dispositif de régulation est associé aux deux ouvertures 63, 64 d'entrée d'air.

Le dispositif de régulation se différencie du deuxième mode de réalisation par les deux volets 59 liés qu'il comprend. Plus particulièrement, les deux volets 59 liés sont associés à une même ouverture 64 d'entrée d'air. Ces deux volets 59 liés sont reliés l'un à l'autre par une bielle 61 de sorte qu'ils pivotent dans un même sens d'ouverture ou de fermeture, les volets 59 liés étant ainsi toujours parallèles entre eux. Ces volets 59 liés sont adaptés pour obstruer l'ouverture 64 à laquelle ils sont associés lorsqu'ils sont en position extrême de fermeture. En outre, un des volets 59 liés est relié au volet 58 profilé par une deuxième bielle 62 de sorte qu'ils pivotent de façon antagoniste.

Le dispositif 101 générateur de flux d'air permet de générer un flux d'air 50 arrivant à l'ouverture 63 d'entrée d'air de la vanne 20.

Le dispositif 101 générateur de flux d'air est initialement à l'arrêt, inactif. Le volet 58 profilé est initialement dans une position de fermeture dans laquelle son côté intrados est orienté vers l'ouverture 63 et son extrémité présentant le bord de fuite du volet 58 profilé est placée contre une butée 60 de la vanne 20 du côté intrados.

Les volets 59 liés sont initialement dans une position extrême d'ouverture laissant ainsi un flux 100 d'air d'entrée s'introduire dans la chambre 98 de mélange de la vanne 20. Le volet 58 profilé empêchant initialement ce dernier flux 100 d'air de traverser l'ouverture 63, le flux 100 d'air provenant de l'ouverture 64 d'entrée d'air est acheminé uniquement à l'ouverture 65 de sortie d'air.

Lorsque le dispositif 101 générateur de flux d'air est actif, le flux 50 d'air généré par le dispositif 101 générateur de flux d'air, présentant un débit supérieur au débit du flux 100 d'air, exerce une force aérodynamique sur le volet 58 profilé de sorte qu'il pivote vers une position extrême d'ouverture pour laisser passer le flux 50 d'air généré par le dispositif 101 générateur de flux d'air dans la chambre 98 de mélange de la vanne 20. La rotation vers une position extrême d'ouverture du volet 58 profilé permet de fermer les volets 59 liés de sorte qu'il empêche le flux 100 d'air de s'introduire dans la chambre 98 de mélange. Le flux 50 d'air généré par le dispositif 101 générateur de flux d'air est ainsi transmis à l'ouverture 65 de sortie d'air.

Dans un quatrième mode de réalisation représenté à la figure 9, la vanne 20 de mélange comprend une ouverture 70 d'entrée d'air, une ouverture 71 d'entrée/sortie d'air et une ouverture 72 de sortie d'air.

Un dispositif de régulation comprend un volet 67 lié associé à l'ouverture 70 d'entrée d'air et un volet 66 profilé associé à l'ouverture 72 de sortie d'air. Une bielle 69 relie les volets 66, 67 du dispositif de régulation de sorte que les volets 66, 67 pivotent de façon antagoniste.

Le dispositif 101 générateur de flux d'air permet de générer un flux d'air 50 arrivant à l'ouverture 71 d'entrée/sortie de la vanne 20.

Le dispositif 101 générateur de flux d'air est initialement à l'arrêt, inactif. Le volet 66 profilé est initialement dans une position de fermeture dans laquelle son côté extrados est orienté vers l'ouverture 72 de sortie d'air et une de ses extrémités est placée contre une butée 68 de la vanne 20 du côté intrados.

Le volet 67 lié est initialement dans une position extrême d'ouverture laissant ainsi un flux 100 d'air d'entrée s'introduire dans la chambre 98 de mélange de la vanne 20. Le volet 66 profilé empêchant initialement ce dernier flux 100 d'air de traverser l'ouverture 72 de sortie d'air, le flux 100 d'air provenant de l'ouverture 70 d'entrée d'air est acheminé uniquement à l'ouverture 71 d'entrée/sortie d'air.

Lorsque le dispositif 101 générateur de flux d'air est actif, le flux 50 d'air généré par le dispositif 101 générateur de flux d'air, présentant un débit supérieur au débit du flux 100 d'air, exerce une force aérodynamique sur le volet 66 profilé de sorte qu'il pivote vers une position extrême d'ouverture pour laisser passer le flux 50 d'air généré par le dispositif 101 générateur de flux d'air dans un conduit de ventilation relié à l'ouverture 72 de sortie d'air. Plus particulièrement, la rotation vers une position extrême d'ouverture du volet 66 profilé permet de fermer le volet 67 lié de sorte qu'il empêche le flux 100 d'air de s'introduire dans la chambre 98 de mélange. Le flux 50 d'air généré par le dispositif 101 générateur de flux d'air est ainsi uniquement transmis au conduit de ventilation relié à l'ouverture 72 de sortie d'air.

Dans un cinquième mode de réalisation représenté à la figure 10, la vanne 20 de mélange présente une ouverture 77 d'entrée d'air et deux ouvertures 78, 79 de sortie d'air.

Un dispositif de régulation est associé à l'ensemble des ouvertures 77, 78, 79 de la vanne 20. En particulier, le dispositif de régulation comprend deux volets 74, 75 liés assemblés solidairement en rotation, un premier volet 74 lié étant associé à l'ouverture 78 de sortie d'air et un deuxième volet 75 lié étant associé à l'ouverture 79 de sortie d'air. Le dispositif comprend également un volet 73 profilé de dimensions inférieures à celles de l'ouverture 77 à laquelle il est associé. Une bielle 99 assemble le volet 73 profilé aux volets 74, 75 liés du dispositif de régulation de sorte que lorsque le volet 73 profilé est en position extrême d'ouverture le premier volet 74 lié est fermé et le deuxième volet 75 lié est ouvert et lorsque le volet 73 profilé est en position extrême de fermeture le premier volet 74 lié est ouvert et le deuxième volet 75 lié est fermé. Dans ce mode de réalisation, le volet 73 profilé est utilisé uniquement pour guider un flux d'air, sa forme étant adaptée pour diriger un flux d'air vers le volet lié ouvert.

Le dispositif 101 générateur de flux d'air permet de générer un flux 50 d'air sortant de la vanne 20 par l'ouverture 78 de sortie d'air de la vanne 20.

Le dispositif 101 générateur de flux d'air est initialement à l'arrêt, inactif. Le volet 73 profilé est initialement dans une position extrême d'ouverture laissant passer le flux 100 d'air vers la chambre 98 de mélange de la vanne 20. Le premier volet 74 lié est initialement maintenu fermé par la force aérodynamique généré par le flux d'air 100 sur le volet 73 profilé. Le premier volet 74 lié, étant fermée, est alors positionné contre une butée 76 empêchant le flux 100 d'air de sortir de la vanne 20 par l'ouverture 78 de sortie d'air. Le deuxième volet 75 lié est initialement ouvert laissant le flux 100 d'air sortir de la vanne 20 par l'ouverture 79 de sortie d'air.

Lorsque le dispositif 101 générateur de flux d'air est actif, le flux 50 d'air généré par le dispositif 101 générateur de flux d'air, présentant un débit supérieur au débit du flux 100 d'air, exerce une force aérodynamique sur le premier volet 74 lié de sorte qu'il pivote vers une position extrême d'ouverture. La rotation vers une position extrême d'ouverture du premier volet 74 lié permet de fermer le deuxième volet 75 lié, empêchant le flux 50 d'air généré par le dispositif 101 générateur de flux d'air de sortir par l'ouverture 79 de sortie d'air.

Dans un sixième mode de réalisation représenté à la figure 11, la vanne 20 de mélange présente une ouverture 84 d'entrée d'air, traversée par un flux 100 d'air, et deux ouvertures 85, 86 de sortie d'air.

Un dispositif de régulation est associé aux deux ouvertures 85, 86 de sortie d'air. En particulier, le dispositif de régulation comprend un volet 81 lié associé à l'ouverture 86 de sortie d'air et un volet 80 profilé associé à l'ouverture 85 de sortie d'air. Une bielle 83 est assemblée aux volets 80, 81 du dispositif de régulation de sorte que les volets 80, 81 pivotent de façon antagoniste.

Le dispositif 101 générateur de flux d'air permet de générer un flux d'air 50 arrivant à l'ouverture 84 d'entrée d'air de la vanne 20.

Le dispositif 101 générateur de flux d'air est initialement à l'arrêt, inactif. Le volet 80 profilé est initialement dans une position extrême de fermeture dans laquelle son côté intrados est orienté vers l'ouverture 85 de sortie d'air et son extrémité présentant le bord de fuite du volet 80 profilé est placée contre une butée 82 de la vanne 20 du côté extrados. Le volet 81 lié est initialement dans une position extrême d'ouverture laissant le flux 100 d'air sortir de la vanne 20 par l'ouverture 86 de sortie d'air.

Lorsque le dispositif 101 générateur de flux d'air est actif, le flux 50 d'air généré par le dispositif 101 générateur de flux d'air, présentant un débit supérieur au débit du flux 100 d'air, exerce une force aérodynamique sur le volet 80 profilé de sorte qu'il pivote vers une position extrême d'ouverture. La rotation vers une position extrême d'ouverture du volet 80 profilé permet de fermer le volet 81 lié de sorte que le flux 50 d'air généré par le dispositif 101 générateur de flux d'air est transmis à l'ouverture 85 de sortie d'air.

Dans un septième mode de réalisation représenté à la figure 12, la vanne 20 de mélange présente trois ouvertures 94, 95, 96 d'entrée d'air et une ouverture 97 de sortie d'air.

Un dispositif de régulation est associé aux trois ouvertures 94, 95, 96 d'entrée d'air. En particulier, le dispositif de régulation comprend un volet 89 lié associé à l'ouverture 94 d'entrée d'air, un premier volet 87 profilé associé à l'ouverture 95 d'entrée d'air et un deuxième volet 88 profilé associé à l'ouverture 96 d'entrée d'air. Le dispositif de régulation comprend également deux bielles 92, 93, chaque bielle assemblant chaque volet 87, 88 profilé au volet 89 lié de sorte que les volets 87, 88 profilés pivotent de façon antagoniste par rapport au volet 89 lié.

Le dispositif 101 générateur de flux d'air permet de générer un flux d'air 50 arrivant à les ouvertures 95, 96 d'entrée d'air de la vanne 20.

Le dispositif 101 générateur de flux d'air est initialement à l'arrêt, inactif. Les volets 87, 88 profilés sont initialement dans une position de fermeture dans laquelle leur côté intrados est orienté vers l'ouverture à laquelle ils sont associés et leur extrémité présentant leur bord de fuite est placée contre une butée 90, 91 de la vanne 20 de leur côté intrados. Le volet 89 lié est initialement dans une position extrême d'ouverture laissant ainsi un flux 100 d'air d'entrée s'introduire dans la chambre 98 de mélange de la vanne 20 par l'ouverture 94 d'entrée d'air. Les volets 87, 88 profilés empêchant initialement ce dernier flux 100 d'air de traverser les ouvertures 95, 96 d'entrée d'air, le flux 100 d'air provenant de l'ouverture 94 d'entrée d'air est acheminé uniquement à l'ouverture 97 de sortie d'air. Lorsque le dispositif 101 générateur de flux d'air est actif, le flux 50 d'air généré par le dispositif 101 générateur de flux d'air, présentant un débit supérieur au débit du flux 100 d'air, exerce une force aérodynamique sur les volets 87, 88 profilés de sorte qu'ils pivotent vers une position extrême d'ouverture pour laisser passer le flux 50 d'air généré par le dispositif 101 générateur de flux d'air. La rotation vers une position extrême d'ouverture des volets 87, 88 profilés permet de fermer le volet 89 lié de sorte qu'il empêche le flux 100 d'air de s'introduire dans la chambre 98 de mélange. Ainsi, le flux 50 d'air généré par le dispositif 101 générateur de flux d'air s'introduisant dans la vanne 20 de mélange par les ouvertures 95, 96 d'entrée d'air est uniquement transmis à l'ouverture 97 de sortie d'air.

L'invention concerne donc une vanne comprenant un dispositif de régulation aéro-commandé permettant de réguler les flux d'air passant par au moins trois ouvertures de la vanne de sorte que le flux d'air extrait de la vanne par au moins une ouverture de sortie d'air dépend de la disposition du dispositif de régulation aéro-commandé dans la vanne de mélange.

L'invention peut faire l'objet de nombreuses variantes de réalisation par rapport aux modes de réalisation décrits ci-dessus et représentés sur les figures. En particulier, un volet lié d'un dispositif de régulation de la vanne peut présenter une forme d'aube. Par ailleurs, un volet aérodynamique présentant une forme en profil d'aube d'un dispositif de régulation peut être orienté de sorte que l'intrados ou l'extrados est en regard de l'ouverture associé à ce volet. En outre, une bielle peut lier plus de deux volets d'un dispositif de régulation entre eux.

Une vanne selon l'invention peut être incorporée dans un système de conditionnement d'air d'un véhicule tel qu'un aéronef, un véhicule terrestre, un navire...

## Revendications

1. Vanne de mélange d'air comprenant :
- une paroi (21) délimitant un volume interne de la vanne et présentant au moins trois ouvertures,
- au moins un dispositif (25) de régulation de flux d'air comprenant :
∘ au moins deux volets (26, 33) placés dans le volume interne de la vanne, dont au moins un volet, dit volet aérodynamique, est agencé par rapport à l'une des ouvertures de façon à pouvoir recevoir un flux d'air traversant cette ouverture,
∘ un mécanisme (102) de liaison entre au moins deux volets (26, 33) desdits au moins deux volets,
- l'un au moins des volets étant guidé par rapport à la paroi (21), chacun des volets (26, 33) étant agencé et guidé de façon à pouvoir être mis en mouvement par rapport à la paroi (21),
**caractérisée en ce que** :
- au moins un dispositif (25) de régulation de flux d'air, dit dispositif (25) de régulation aéro-commandé dudit au moins un dispositif de régulation de flux d'air, est monté librement mobile par rapport à la paroi (21), de façon à pouvoir être déplacé exclusivement sous l'effet de variations d'au moins une partie de flux d'air traversant au moins une partie des ouvertures,
- au moins un volet aérodynamique, dit volet (26) profilé, dudit au moins un volet aérodynamique d'au moins un dispositif (25) de régulation aéro-commandé, a une forme en profil d'aube comprenant un bord (47) d'attaque et un bord (27) de fuite et présentant une épaisseur non constante entre son bord d'attaque et son bord de fuite, de façon à pouvoir être entraîné en mouvement par l'énergie aérodynamique d'au moins un flux d'air (42, 43) incident sur ce volet (26) profilé,
- au moins un volet, dit volet (33) lié, dudit au moins un dispositif (25) de régulation aéro-commandé, est relié à au moins un volet (26) profilé de ce dispositif (25) de régulation aéro-commandé par un mécanisme (102) de liaison agencé de telle sorte qu'un tel volet (33) lié est entraîné en mouvement par un mouvement d'au moins un volet (26) profilé auquel il est relié par le mécanisme (102) de liaison, et **en ce qu'**au moins un volet (26) profilé est cambré de façon à pouvoir former un passage (44) convergent/divergent de flux d'air (42) entre ce volet et la paroi (21).

2. Vanne selon la revendication 1, **caractérisée en ce qu'**au moins un volet (26) profilé et au moins un volet (33) lié d'un dispositif (25) de régulation aéro-commandé sont adaptés pour pouvoir être maintenus dans une position exclusivement sous l'effet d'au moins une partie de flux d'air traversant au moins une partie des ouvertures.

3. Vanne selon l'une des revendications 1 ou 2, **caractérisée en ce qu'**au moins un volet (26) profilé à un profil d'aube à cambrure.

4. Vanne selon l'une des revendications 1 à 3, **caractérisée en ce que** chaque volet d'un dispositif (25) de régulation est articulé par rapport à la paroi (21) par une liaison pivot de façon à pouvoir pivoter entre deux positions extrêmes.

5. Vanne selon la revendication 4, **caractérisée en ce que** chaque volet (26) profilé d'un dispositif (25) de régulation aéro-commandé est articulé à la paroi (21) par une liaison pivot selon un axe (29) de pivot passant au moins sensiblement par un foyer aérodynamique de ce volet (26) profilé.

6. Vanne selon la revendication 5, **caractérisée en ce que** l'axe (29) de pivot d'un volet (26) profilé est décalé par rapport à un point d'application, dit centre de poussée, de la résultante des forces aérodynamiques générées sur ce volet (26) profilé.

7. Vanne selon l'une des revendications 1 à 6, **caractérisée en ce que** chaque volet (26, 33) d'au moins un dispositif (25) de régulation aéro-commandé est associé à une ouverture, dite ouverture (22, 23) associée, présentant une section efficace de passage dont l'aire dépend de la position dudit volet (26, 33).

8. Vanne selon la revendication 7, **caractérisée en ce que** chaque volet (26, 33) associé à une ouverture, d'un dispositif (25) de régulation aéro-commandé, est adapté pour pouvoir pivoter entre une position extrême d'ouverture, permettant à un flux d'air de traverser l'ouverture associée, et une position extrême de fermeture, empêchant au moins pour partie un flux d'air de traverser l'ouverture associée.

9. Vanne selon l'une des revendications 7 à 8, **caractérisée en ce qu'**au moins un volet (26, 33) associé à une ouverture d'un dispositif (25) de régulation aéro-commandé est agencé pour pouvoir être entraîné en pivotement vers une position extrême de fermeture lorsqu'au moins un autre volet (26, 33) d'un même dispositif (25) de régulation aéro-commandé pivote vers une position extrême d'ouverture.

10. Vanne selon l'une des revendications 1 à 9, **caractérisée en ce que** le mécanisme (102) de liaison entre les volets d'un dispositif (25) de régulation comprend au moins une bielle (35, 28, 38) reliant deux volets (26, 33) de ce dispositif (25) de régulation.

11. Vanne selon les revendications 4 et 10, **caractérisée en ce que** la liaison pivot d'articulation de chaque volet (26, 33) à la paroi (21) et une liaison d'articulation de chaque volet (26, 33) au mécanisme (102) de liaison sont des liaisons pivot selon des axes parallèles et décalés l'un par rapport à l'autre.

12. Vanne selon la revendication 4 et l'une des revendications 1 à 11, **caractérisée en ce qu'**elle comprend au moins une butée (31, 32) permettant de limiter la rotation d'au moins un volet (26, 33) d'un dispositif (25) de régulation dans un sens autour de l'axe (29, 36) de la liaison pivot d'articulation du volet à la paroi (21).

13. Système de conditionnement d'air **caractérisé en ce qu'**il comprend au moins une vanne de mélange d'air selon l'une des revendications 1 à 12.

14. Système de conditionnement d'air selon la revendication 13 **caractérisé en ce qu'**il comprend au moins un dispositif générateur (101) de flux d'air apte à générer un flux d'air (42, 43) basse pression pouvant exercer une force aérodynamique sur au moins un volet (26) profilé d'un dispositif (25) de régulation aéro-commandé d'une vanne de mélange d'air.

15. Véhicule -notamment aéronef- **caractérisé en ce qu'**il comprend un système de conditionnement d'air selon l'une des revendications 13 ou 14.

## Patentansprüche

1. Luftmischventil, umfassend:
- eine Wand (21), die ein Innenvolumen des Ventils begrenzt und mindestens drei Öffnungen aufweist,
- mindestens eine Vorrichtung (25) zur Luftstromregelung, umfassend:
-- mindestens zwei Klappen (26, 33), die im Innenvolumen des Ventils platziert sind, von denen mindestens eine Klappe, welche als aerodynamische Klappe bezeichnet wird, in Bezug auf eine der Öffnungen so eingerichtet ist, dass sie einen Luftstrom aufnehmen kann, der diese Öffnung durchströmt,
-- einen Verbindungsmechanismus (102) zwischen mindestens zwei Klappen (26, 33) der mindestens zwei Klappen,
- wobei mindestens eine der Klappen in Bezug auf die Wand (21) geführt wird, wobei jede der Klappen (26, 33) so eingerichtet ist und geführt wird, dass sie in Bezug auf die Wand (21) in Bewegung gebracht werden kann,
**dadurch gekennzeichnet, dass**:
- mindestens eine Luftstromregelvorrichtung (25), die als luftgesteuerte Regelvorrichtung (25) bezeichnet wird, der mindestens einen Luftstromregelvorrichtung in Bezug auf die Wand (21) frei beweglich montiert ist, sodass sie ausschließlich unter der Wirkung von Schwankungen mindestens eines Luftstromteils, der mindestens einen Teil der Öffnungen durchströmt, verstellt werden kann,
- mindestens eine aerodynamische Klappe, die als Profilklappe (26) bezeichnet wird, der mindestens einen aerodynamischen Klappe mindestens einer luftgesteuerten Regelvorrichtung (25) eine Schaufelprofilform aufweist, die eine Anströmkante (47) und eine Abströmkante (27) umfasst und zwischen ihrer Anströmkante und ihrer Abströmkante eine nicht konstante Dicke aufweist, sodass sie durch die aerodynamische Energie mindestens eines Luftstroms (42, 43), der auf diese Profilklappe (26) trifft, in Bewegung angetrieben werden kann,
- mindestens eine Klappe, die als verbundene Klappe (33) bezeichnet wird, der mindestens einen luftgesteuerten Regelvorrichtung (25) mit mindestens einer Profilklappe (26) dieser luftgesteuerten Regelvorrichtung (25) über einen Verbindungsmechanismus (102) verbunden ist, der derart eingerichtet ist, dass eine solche verbundene Klappe (33) durch eine Bewegung mindestens einer Profilklappe (26), mit der sie über den Verbindungsmechanismus (102) verbunden ist, in Bewegung angetrieben wird,
und dadurch, dass mindestens eine Profilklappe (26) gewölbt ist, sodass sie einen konvergenten/divergenten Luftstrom- (42) Kanal (44) zwischen dieser Klappe und der Wand (21) bilden kann.

2. Ventil nach Anspruch 1, **dadurch gekennzeichnet, dass** mindestens eine Profilklappe (26) und mindestens eine verbundene Klappe (33) einer luftgesteuerten Regelvorrichtung (25) dafür geeignet sind, ausschließlich unter der Wirkung mindestens eines Luftstromteils, der mindestens einen Teil der Öffnungen durchströmt, in einer Stellung gehalten werden zu können.

3. Ventil nach einem der Ansprüche 1 oder 2, **dadurch gekennzeichnet, dass** mindestens eine Profilklappe (26) ein Schaufelprofil mit Wölbung aufweist.

4. Ventil nach einem der Ansprüche 1 bis 3, **dadurch gekennzeichnet, dass** jede Klappe einer Regelvorrichtung (25) in Bezug auf die Wand (21) über eine Schwenkverbindung angelenkt ist, sodass sie zwischen zwei Extremstellungen schwenken kann.

5. Ventil nach Anspruch 4, **dadurch gekennzeichnet, dass** jede Profilklappe (26) einer luftgesteuerten Regelvorrichtung (25) über eine Schwenkverbindung entlang einer Schwenkachse (29), die mindestens im Wesentlichen durch einen aerodynamischen Mittelpunkt dieser Profilklappe (26) verläuft an der Wand (21) angelenkt ist.

6. Ventil nach Anspruch 5, **dadurch gekennzeichnet, dass** die Schwenkachse (29) einer Profilklappe (26) in Bezug auf einen als Schubzentrum bezeichneten Angriffspunkt der Resultierenden der an dieser Profilklappe (26) erzeugten aerodynamischen Kräfte versetzt ist.

7. Ventil nach einem der Ansprüche 1 bis 6, **dadurch gekennzeichnet, dass** jede Klappe (26, 33) mindestens einer luftgesteuerten Regelvorrichtung (25) einer als zugeordnete Öffnung (22, 23) bezeichneten Öffnung zugeordnet ist, die einen Kanal-Wirkungsquerschnitt aufweist, dessen Flächeninhalt von der Stellung der Klappe (26, 33) abhängt.

8. Ventil nach Anspruch 7, **dadurch gekennzeichnet, dass** jede einer Öffnung zugeordnete Klappe (26, 33) einer luftgesteuerten Regelvorrichtung (25) dafür geeignet ist, zwischen einer extremen Öffnungsstellung, die es einem Luftstrom ermöglicht, die zugeordnete Öffnung zu durchströmen, und einer extremen Schließstellung schwenken zu können, die einen Luftstrom mindestens zum Teil daran hindert, die zugeordnete Öffnung zu durchströmen.

9. Ventil nach einem der Ansprüche 7 bis 8, **dadurch gekennzeichnet, dass** mindestens eine Klappe (26, 33), die einer Öffnung einer luftgesteuerten Regelvorrichtung (25) zugeordnet ist, dafür eingerichtet ist, in Schwenkbewegung zu einer extremen Schließstellung hin angetrieben werden zu können, wenn mindestens eine andere Klappe (26, 33) ein und derselben luftgesteuerten Regelvorrichtung (25) zu einer extremen Öffnungsstellung hin schwenkt.

10. Ventil nach einem der Ansprüche 1 bis 9, **dadurch gekennzeichnet, dass** der Verbindungsmechanismus (102) zwischen den Klappen einer Regelvorrichtung (25) mindestens ein Pleuel (35, 28, 38) umfasst, das zwei Klappen (26, 33) dieser Regelvorrichtung (25) verbindet.

11. Ventil nach den Ansprüchen 4 und 10, **dadurch gekennzeichnet, dass** die Schwenkverbindung zum Anlenken jeder Klappe (26, 33) an der Wand (21), und eine Verbindung zum Anlenken jeder Klappe (26, 33) am Verbindungsmechanismus (102) Schwenkverbindungen entlang parallelen und zueinander versetzten Achsen sind.

12. Ventil nach Anspruch 4 und einem der Ansprüche 1 bis 11, **dadurch gekennzeichnet, dass** es mindestens einen Anschlag (31, 32) umfasst, der es ermöglicht, die Drehung mindestens einer Klappe (26, 33) einer Regelvorrichtung (25) in einer Richtung um die Achse (29, 36) der Schwenkverbindung zum Anlenken der Klappe an der Wand (21) herum zu begrenzen.

13. Klimaanlagensystem, **dadurch gekennzeichnet, dass** es mindestens ein Luftmischventil nach einem der Ansprüche 1 bis 12 umfasst.

14. Klimaanlagensystem nach Anspruch 13, **dadurch gekennzeichnet, dass** es mindestens eine Luftstromerzeugungsvorrichtung (101) umfasst, die in der Lage ist, einen Niederdruck-Luftstrom (42, 43) zu erzeugen, der eine aerodynamische Kraft auf mindestens eine Profilklappe (26) einer luftgesteuerten Regelvorrichtung (25) eines Luftmischventils ausüben kann.

15. Fahrzeug - insbesondere Luftfahrzeug - **dadurch gekennzeichnet, dass** es ein Klimaanlagensystem nach einem der Ansprüche 13 oder 14 umfasst.

## Claims

1. Air mix valve comprising:
- a wall (21) delimiting an internal volume of the valve and having at least three openings,
- at least one airflow-regulating device (25) comprising:
∘ at least two shutters (26, 33) placed in the internal volume of the valve, at least one of which, named aerodynamic shutter, is arranged with respect to one of the openings so as to be able to receive an airflow passing through this opening,
∘ a linking mechanism (102) between at least two shutters (26, 33) of the at least two shutters,
- at least one of the shutters being guided with respect to the wall (21), each of the shutters (26, 33) being arranged and guided so as to be able to be caused to move with respect to the wall (21),
wherein:
- at least one airflow-regulating device (25), named aero-controlled regulation device (25) of said at least one airflow-regulating device, is mounted to be freely movable with respect to the wall (21), so as to be able to be displaced exclusively under the effect of variations in at least part of the airflow passing through at least some of the openings,
- at least one aerodynamic shutter, named profiled shutter (26), of the at least one aerodynamic shutter, of at least one aero-controlled regulation device (25), has the shape of a blade profile comprising a leading edge (47) and a trailing edge (27) and having a non-constant thickness between its leading edge and its trailing edge, so as to be able to be caused to move by the aerodynamic energy of at least one airflow (42, 43) which is incident on this profiled shutter (26),
- at least one shutter, named linked shutter (33), of the said at least aero-controlled regulation device (25), is connected to at least one profiled shutter (26) of this aero-controlled regulation device (25) by a linking mechanism (102) arranged such that such a linked shutter (33) is caused to move by a movement of at least one profiled shutter (26) to which it is connected by the linking mechanism (102),
and wherein at least one profiled shutter (26) is cambered such that it can form a convergent/divergent airflow (42) passage (44) between the shutter and the wall (21).

2. Valve according to claim 1, wherein at least one profiled shutter (26) and at least one linked shutter (33) of an aero-controlled regulation device (25) are adapted to be able to be held in a position exclusively under the effect of at least part of an airflow passing through at least some of the openings.

3. Valve according to claims 1 or 2, wherein at least one profiled shutter (26) has a cambered blade profile.

4. Valve according to claims 1 to 3, wherein each shutter of a regulation device (25) is articulated with respect to the wall (21) by a pivot link so as to be able to pivot between two end positions.

5. Valve according to claim 4, wherein each profiled shutter (26) of an aero-controlled regulation device (25) is articulated to the wall (21) by a pivot link along a pivot axis (29) passing at least substantially through an aerodynamic centre of this profiled shutter (26).

6. Valve according to claim 5, wherein the pivot axis (29) of a profiled shutter (26) is offset with respect to a point of application, named centre of pressure, of the resultant of the aerodynamic forces generated on this profiled shutter (26).

7. Valve according to claim 1 to 6, wherein each shutter (26, 33) of at least one aero-controlled regulation device (25) is associated with an opening, named associated opening (22, 23), having a passage cross-section, the surface area of which depends upon the position of said shutter (26, 33).

8. Valve according to claim 7, wherein each shutter (26, 33) associated with an opening of an aero-controlled regulation device (25) is adapted to be able to pivot between an opening end position, allowing an airflow to pass through the associated opening, and a closing end position, preventing at least in part an airflow from passing through the associated opening.

9. Valve according to claims 7 and 8, wherein at least one shutter (26, 33) associated with an opening of an aero-controlled regulation device (25) is arranged to be able to be caused to pivot towards a closing end position when at least one other shutter (26, 33) of the same aero-controlled regulation device (25) pivots towards an opening end position.

10. Valve according to claims 1 to 9, wherein the linking mechanism (102) between the shutters of a regulation device (25) comprises at least one connecting rod (35, 28, 38) connecting two shutters (26, 33) of this regulation device (25).

11. Valve according to claims 4 to 10, wherein the pivot link articulating each shutter (26, 33) to the wall (21), and a link articulating each shutter (26, 33) to the linking mechanism (102), are pivot links along axes which are in parallel with each other and offset with respect to each other.

12. Valve according to claim 4, and one of the claims 1 to 11, wherein it comprises at least one stop (31, 32) able to limit the rotation of at least one shutter (26, 33) of a regulation device (25) in one direction about the axis (29, 36) of the pivot link articulating the shutter to the wall (21).

13. Air-conditioning system, wherein it comprises at least one air mix valve according to one of claims 1 to 12.

14. Air-conditioning system according to claim 13, wherein it comprises at least one airflow generating device (101) able to generate a low-pressure airflow (42, 43) which can exert an aerodynamic force on at least one profiled shutter (26) of an aero-controlled regulation device (25) of an air mix valve.

15. Vehicle - in particular an aircraft - wherein it comprises an air-conditioning system according to claims 13 or 14.
